# DEMANDE DE BREVET EUROPEEN

(11) **EP 1 936 219 A1**
(43) Date de publication de la demande: **25.06.2008**
(21) Numéro de dépôt: 07301474.8
(22) Date de dépôt: 17.10.2007
(51) Int. Cl.: F16D 13/48, F16D 13/04

(54) **Embrayage à disque de friction pour boîte de vitesses de véhicule automobile**

(30) Priorité: 22.12.2006 FR 0655890
(71) Demandeur: Renault SAS, 92100 Boulogne Billancourt (FR)
(72) Inventeur: Raoul, Michel, 78990 Elancourt (FR)

(57) **Abrégé**

Embrayage pour boîte de vitesses de véhicule automobile du type comprenant un disque de friction (1) monté entre un volant moteur (2) et un plateau de pression (3) mobile axialement, un diaphragme (4) de mise en pression axiale du plateau, articulé sur un couvercle (5) solidaire du volant moteur (2) et pouvant être actionné par l'intermédiaire d'une butée d'embrayage (22), le plateau de pression (3) étant guidé par au moins trois pions de centrages (7) montés dans des lumières oblongues, caractérisé par le fait que des plots d'entraînement (30,39), fixés sur le couvercle (5) ou sur le plateau de pression (3) et disposés entre le couvercle (5) et le plateau de pression (3) coopérant avec des moyens de cames (36,41) à surfaces inclinées.

## Description

La présente invention concerne les embrayages utilisés dans les boîtes de vitesses pour véhicules automobiles, embrayages comprenant d'une manière générale un disque de friction monté entre un volant moteur et un plateau de pression mobile axialement. Les embrayages de ce type fonctionnent par friction à sec et peuvent être utilisés avec des boîtes de vitesses à commande manuelle ou des boîtes de vitesses robotisées dans lesquelles l'embrayage est alors piloté par des actionneurs, par exemple à commande hydraulique.

Ce type d'embrayage comprend généralement un diaphragme de mise en pression axiale du plateau de pression mobile, diaphragme qui peut être actionné par l'intermédiaire d'une butée d'embrayage. Lors de l'action sur la fourchette de débrayage soit manuellement, soit par un actionneur, le diaphragme vient exercer une pression axiale sur le plateau mobile qui enserre un disque de friction capable de transmettre le mouvement de rotation du plateau de pression jusqu'à l'arbre d'entrée ou arbre primaire de la boîte de vitesses. L'action de poussée sur la butée d'embrayage provoque le pivotement du diaphragme et libère le plateau de pression qui se dégage du disque de friction, plaçant ainsi l'embrayage en position ouverte.

Pour qu'un embrayage de ce type puisse fonctionner correctement, il est nécessaire qu'un couple de frottement suffisant soit exercé par le diaphragme de manière à assurer la solidarisation en rotation du volant moteur, du plateau de pression mobile et du disque de friction, le disque de friction étant, quant à lui, solidaire en rotation de l'arbre primaire de la boîte de vitesses. L'effort que le diaphragme doit exercer nécessite un effort correspondant sur la pédale d'embrayage dans le cas d'une boîte de vitesses manuelle ou un actionneur d'une capacité suffisante pour assurer l'ouverture de l'embrayage dans le cas d'une boîte de vitesses robotisée.

La présente invention a pour objet de faciliter le fonctionnement d'un tel embrayage et de réduire les efforts nécessaires pour l'actionnement de l'embrayage.

Dans un mode de réalisation, un embrayage pour boîte de vitesses de véhicule automobile comprend un disque de friction monté entre un volant moteur et un plateau de pression mobile axialement et un diaphragme de mise en pression axiale du plateau, articulé sur un couvercle solidaire du volant moteur et pouvant être actionné par l'intermédiaire d'une butée d'embrayage. Le plateau de pression est guidé par au moins trois pions de centrage montés dans des lumières oblongues. Des moyens de cames à surfaces inclinées coopérant avec des plots d'entraînement du plateau de pression, sont disposés entre le couvercle et le plateau de pression.

Lorsque l'embrayage est actionné, une poussée axiale est exercée par le frottement des plots d'entraînement sur les surfaces de cames, en raison de leur inclinaison par rapport à l'axe de l'embrayage. Le plateau subit de ce fait une légère rotation qui est autorisée par la forme oblongue des lumières dans lesquels pénètrent les pions de centrage du plateau de pression. Le serrage de l'embrayage est donc obtenu par la combinaison de l'effort axial exercé par le diaphragme et de la poussée axiale supplémentaire générée par les surfaces de cames coopérant avec les plots d'entraînement.

On obtient ainsi une auto-assistance au serrage de l'embrayage. L'effort à exercer sur le diaphragme se trouve réduit.

Les plots d'entraînement sont de préférence disposés radialement.

Selon un mode de réalisation, les plots d'entraînement sont fixés sur le couvercle. Dans un autre mode de réalisation, les plots d'entraînement sont au contraire fixés sur le plateau de pression.

Dans les deux cas, les moyens de cames comprennent de préférence des crans ouverts présentant des surfaces inclinées par rapport à l'axe longitudinal de l'embrayage.

Lorsque les plots d'entraînement sont fixés sur le couvercle, les crans peuvent être réalisés sous la forme d'évidements pratiqués à la périphérie du plateau de pression.

Lorsque les plots d'entraînement sont au contraire fixés sur le plateau de pression, les crans peuvent être réalisés sous la forme des fenêtres pratiquées dans une partie annulaire cylindrique du couvercle.

On prévoit avantageusement au moins trois moyens de cames et trois plots d'entraînement correspondant répartis à intervalles réguliers sur la périphérie.

Des ressorts hélicoïdaux sont en outre de préférence montés sur les pions de centrage de façon à exercer un effort tendant à écarter le plateau de pression du volant moteur.

Un moyen de ressort exerçant un effort axial tendant à appuyer le diaphragme sur le plateau de pression est en outre avantageusement prévu.

L'invention sera mieux comprise à l'étude d'un mode de réalisation particulier décrit à titre d'exemple nullement limitatif et illustré par les dessins annexés sur lesquels :
- la figure 1 est une vue schématique en coupe d'un embrayage selon l'invention en position fermée, selon un premier mode de réalisation ;
- la figure 2 est une vue de détail en coupe selon II-II de la figure 1 ;
- la figure 3 est une vue en coupe selon III-III de la figure 1 ;
- la figure 4 est une vue en coupe analogue à la figure 3 montrant les moyens de cames en position de repos ;
- la figure 5 est une demi-vue en coupe schématique analogue à la figure 1 d'un deuxième mode de réalisation d'un embrayage selon l'invention ; et
- la figure 6 est une vue en coupe selon VI-VI de la figure 5.

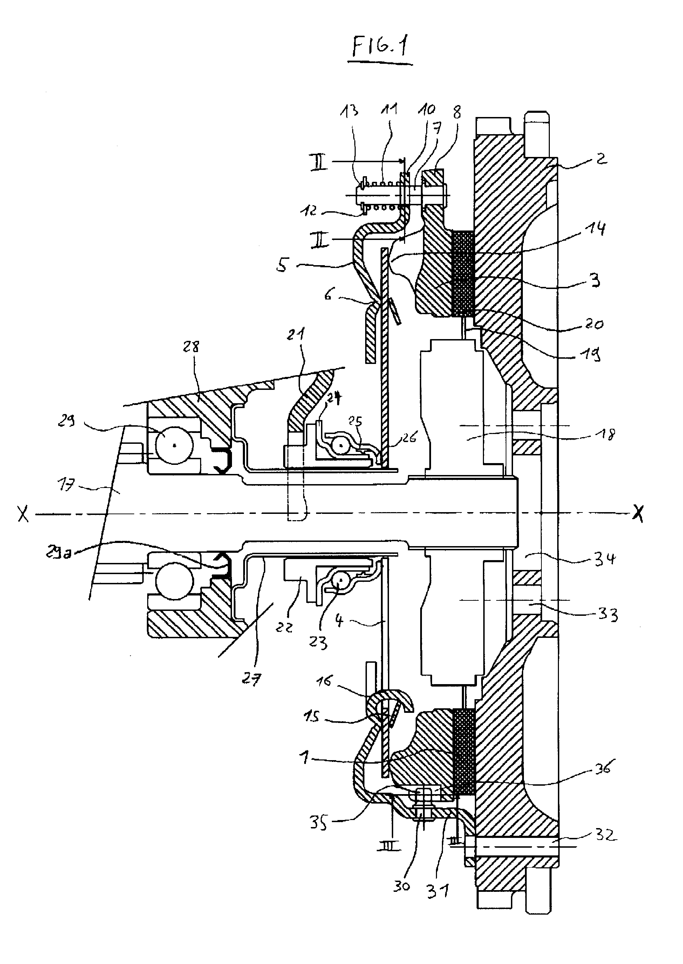

Tel qu'il est représenté sur la figure 1, un embrayage monodisque à frottement sec selon l'invention comprend un disque de friction 1 monté entre un volant moteur 2 et un plateau de pression 3 mobile axialement selon l'axe longitudinal X-X de l'embrayage. Un diaphragme 4 est capable d'exercer une pression en direction axiale sur le plateau de pression mobile 3. Le diaphragme 4 est articulé sur un couvercle 5 qui présente une nervure en saillie 6 venant en contact avec le diaphragme 4.

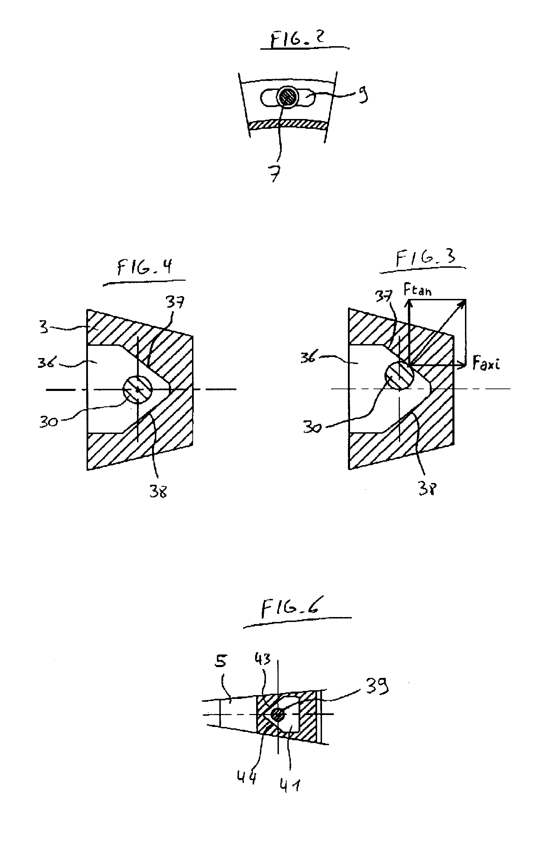

Le plateau de pression 3 est guidé par des pions de centrage 7. Dans l'exemple illustré, les pions 7 sont par exemple au nombre de 3 et répartis également à la périphérie du plateau de pression 3. Les pions 7 sont orientés axialement et sont fixés, par exemple par rivetage, chacun sur une porsion périphérique radiale 8 du plateau de pression 3. Les pions de centrage 7 traversent des lumières oblongues 9 visibles sur la figure 2 pratiquées dans des pattes radiales 10 du couvercle 5. Des ressorts hélicoïdaux 11 sont montés autour de la partie des pions de centrage 7 qui fait saillie au-delà du couvercle 5 après traversée des lumières 9. Les ressorts hélicoïdaux 11 s'appuient, d'une part sur les pattes radiales 10 et d'autre part, sur une rondelle d'appui 12 elle-même maintenue par un clip de retenue 13. De cette manière, l'effort axial exercé par les ressorts hélicoïdaux 11 par rapport au couvercle 5 tend à ouvrir l'embrayage, c'est-à-dire à séparer axialement le plateau de pression 3 du disque de friction 1.

Le diaphragme 4 permettant la mise en pression du plateau mobile 3 vient agir par sa périphérie radiale sur un bossage périphérique 14 de forme générale annulaire du plateau de pression 3. Une rondelle ressort de type Belleville 15 est montée sur des pattes de retenue 16 en forme de crochets faisant partie du couvercle 5. La rondelle ressort 15 maintient ainsi le diaphragme 4 en appui sur le couvercle 5.

Le disque de friction 1 transmet le mouvement de rotation du plateau de pression 3 à l'arbre d'entrée ou arbre primaire 17 de la boîte de vitesses. A cet effet, le disque de friction 1 comprend un moyeu central 18 sur lequel est fixé un dispositif amortisseur comprenant des flasques en tôle et des ressorts périphériques, l'ensemble du mécanisme n'étant pas représenté sur la figure 1. Le moyeu amortisseur 18 est solidaire en rotation de l'arbre primaire 17 et supporte un disque en tôle 19 sur lequel sont accrochés les éléments de friction proprement dits 20 en forme de couronne, qui peuvent être serrés axialement entre le plateau de pression 3 et le volant moteur 2 lorsque l'embrayage est fermé.

Lorsque l'embrayage n'est pas actionné, il est fermé par défaut par l'action de la rondelle ressort 15 sur le diaphragme 4. Pour ouvrir l'embrayage, il convient de manoeuvrer une fourchette de débrayage 21 qui agit sur une butée 22, généralement appelée « butée d'embrayage » qui comporte une rangée de billes 23 montées entre une bague intérieure 24 et une bague extérieure 25. La bague extérieure 25 présente une collerette radiale 26 qui entre en contact avec le diaphragme 4. La butée 22 dans son ensemble peut coulisser par rapport à un tube guide 27 monté sur le carter d'embrayage 28. Un palier à roulement 29 supporte l'arbre primaire 17 dans le carter d'embrayage 28.

Un joint d'étanchéité 29a permet d'assurer l'étanchéité du palier à roulement 29 entre l'arbre primaire 17 et le carter d'embrayage 28. Le volant moteur 2 est fixé par des vis 33 sur le vilebrequin du moteur non représenté dont l'extrémité vient se loger dans l'évidement 34 du volant moteur 2.

Trois plots d'entraînement 30 orientés radialement sont montés sur une portion axiale 31 du couvercle 5, lequel est fixé par des vis 32 sur le volant moteur 2. Les plots d'entraînement 30, qui sont par exemple au nombre de trois et répartis également sur la périphérie du dispositif, sont fixés, par exemple par rivetage, sur le couvercle 5. Une portion 35 des plots d'entraînement 30 fait saillie radialement vers l'intérieur et pénètre dans des crans ouverts 36 qui présentent deux surfaces de cames inclinées 37 et 38, visibles sur les figures 3 et 4. Les crans 36 sont pratiqués à la périphérie du plateau de pression 3 et sont ouverts radialement vers l'extérieur et axialement du côté du couvercle 5, comme on le voit sur les figures 3 et 4.

En fonctionnement, le couple de frottement qui s'exerce entre le volant moteur 2 et le plateau de pression 3 par l'intermédiaire du disque de friction 1 résulte de la poussée exercée par le diaphragme 4 d'une part, et de la poussée axiale induite au contact des plots d'entraînement 30 et des surfaces de cames inclinées 37 d'autre part. En effet, comme on le voit sur la figure 3, un plot d'entraînement 30 en contact avec la surface de came inclinée 37 génère une force tangentielle Fₜₐₙ et une force axiale Fₐₓᵢ, laquelle vient s'ajouter à l'effort exercé par le diaphragme 4 pour renforcer la pression du plateau 3 à l'encontre du disque de friction 1. Le couple qui transite entre le plateau de pression 3 et le couvercle 5 par l'intermédiaire des plots d'entraînement 30 génère ainsi, grâce à l'inclinaison des flancs de contact 37, une force axiale ayant tendance à augmenter le serrage du plateau de pression 3.

Il en résulte un embrayage auto-assisté réduisant d'autant l'effort que le diaphragme 4 doit exercer pour fermer l'embrayage. La réduction de l'effort exercé par l'embrayage facilite les manoeuvres de l'embrayage. Lorsqu'un tel embrayage est utilisé dans une boîte de vitesses robotisée comportant des actionneurs, par exemple de type hydraulique, il est ainsi possible de réduire la capacité de ces actionneurs. Lorsque l'embrayage est utilisé au contraire avec une boîte de vitesses à commande manuelle, l'effort qui doit être exercé par le conducteur du véhicule sur la pédale de débrayage se trouve d'autant réduit.

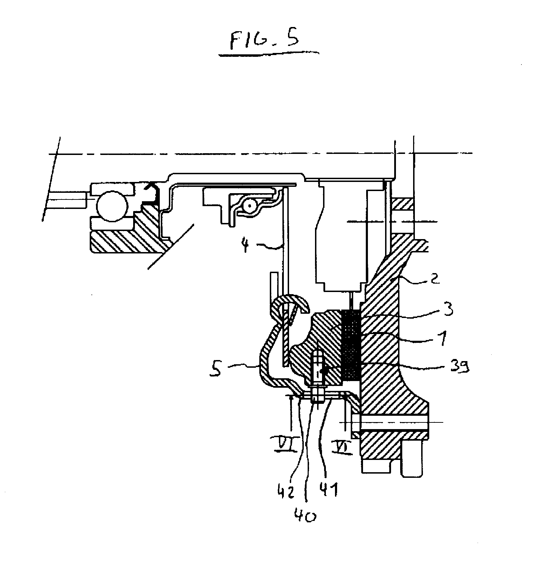

Les figures 5 et 6 illustrent un deuxième mode de réalisation dans lequel les plots d'entraînement disposés entre le couvercle 5 et le plateau de pression 3 sont cette fois fixés sur le plateau de pression 3. Dans l'exemple illustré, ces plots d'entraînement, référencés 39, sont fixés par vissage radial en périphérie du plateau de pression 3. Leur portion en saillie 40 orientée radialement vers l'extérieur, vient coopérer avec un évidement 41 pratiqué dans des pattes axiales 42 du couvercle 5. Les parois des évidements 41 présentent des surfaces de cames inclinées 43 et 44 qui permettent, par coopération avec les plots d'entraînement 39, de générer, comme dans le mode de réalisation précédent, une force dirigée axialement qui favorise le serrage du plateau de pression 3 à l'encontre du disque de friction 1.

## Revendications

1. Embrayage pour boîte de vitesses de véhicule automobile du type comprenant un disque de friction (1) monté entre un volant moteur (2) et un plateau de pression (3) mobile axialement, un diaphragme (4) de mise en pression axiale du plateau, articulé sur un couvercle (5) solidaire du volant moteur (2) et pouvant être actionné par l'intermédiaire d'une butée d'embrayage (22), le plateau de pression (3) étant guidé par au moins trois pions de centrage (7) montés dans des lumières oblongues **caractérisé par le fait que** des plots d'entraînement (30, 39), fixés sur le couvercle (5) ou sur le plateau de pression (3) et disposés entre le couvercle (5) et le plateau de pression (3) coopérant avec des moyens de cames (36, 41) à surfaces inclinées.

2. Embrayage selon la revendication 1 dans lequel les plots d'entraînement (30, 39) sont disposés radialement.

3. Embrayage selon les revendications 1 ou 2 dans lequel les plots d'entraînement (30) sont fixés sur une portion axiale (31) du couvercle (5).

4. Embrayage selon les revendications 1 ou 2, dans lequel les plots d'entraînement (39) sont fixés sur la périphérie du plateau de pression (3).

5. Embrayage selon l'une des revendications précédentes dans lequel les moyens de cames comprennent des crans ouverts (36, 41) présentant des surfaces (37,38 ; 43,44) inclinées par rapport à l'axe longitudinal de l'embrayage.

6. Embrayage selon la revendication 5 dans lequel les crans sont des évidements (36) pratiqués à la périphérie du plateau de pression.

7. Embrayage selon la revendication 5 dans lequel les crans sont des fenêtres (41) pratiquées dans une partie annulaire cylindrique du couvercle.

8. Embrayage selon l'une des revendications précédentes comprenant au moins trois moyens de cames et trois plots d'entraînement correspondant répartis sur la périphérie.

9. Embrayage selon l'une des revendications précédentes dans lequel des ressorts hélicoïdaux (11) sont montés sur les pions de centrage (7) de façon à exercer un effort tendant à écarter le plateau de pression (3) du volant moteur (2).

10. Embrayage selon l'une des revendications précédentes comprenant un moyen de ressort (15) exerçant un effort axial tendant à appuyer le diaphragme (4) sur le plateau de pression (3).
